# FASCICULE DE BREVET EUROPEEN

(11) **EP 4 592 580 B1**
(45) Date de publication et mention de la délivrance du brevet: **11.11.2026**
(21) Numéro de dépôt: 25153697.5
(22) Date de dépôt: 24.01.2025
(51) Int. Cl.: F16N 7/38, B61K 3/02, F16N 29/04, F01M 11/12

(54) **VÉHICULE COMPRENANT UN SYSTÈME DE LUBRIFICATION**
FAHRZEUG MIT EINEM SCHMIERSYSTEM
VEHICLE COMPRISING A LUBRICATION SYSTEM

(30) Priorité: 24.01.2024 FR 2400679
(43) Date de publication de la demande: 30.07.2025
(73) Titulaire: SpeedInnov, 75008 Paris (FR)
(72) Inventeur: SARTI, Christophe, 17220 Saint-Médard-d'Aunis (FR); LENEUTRE, Valentin, 17220 Saint-Médard-d'Aunis (FR)
(74) Mandataire: Plasseraud IP

(56) Documents cités:
- EP-A1- 0 515 326
- CN-U- 215 097 594
- JP-A- H0 446 296
- US-A- 5 159 313
- US-A- 5 904 126
- US-A1- 2019 024 547

## Description

La présente invention concerne un véhicule comprenant un système de lubrification d'au moins une composante du véhicule.

L'invention concerne en particulier le domaine de l'opération de véhicules ferroviaires.

On connaît des véhicules comprenant un ou plusieurs systèmes de lubrification configurés pour lubrifier au moins une composante d'un tel véhicule, comme par exemple un boudin de roue de véhicule ferroviaire. US5904126 A décrit un exemple connu de l'état de la technique.

Classiquement, ces systèmes comprennent un réservoir comprenant un lubrifiant. Afin d'éviter une vidange complète du réservoir pendant l'opération du véhicule, le réservoir est rempli du lubrifiant à chaque opération de maintenance de celui-ci. Par conséquent, le réservoir est souvent totalement ou presque totalement rempli.

De tels systèmes impliquent ainsi une maintenance fréquente, ce qui n'est pas optimal.

Un but de l'invention est ainsi de fournir un véhicule comprenant un système de lubrification présentant un besoin de maintenance réduit, tout en garantissant une lubrification de la ou les composantes du véhicule.

À cet effet, l'invention a pour objet un système de lubrification d'au moins une composante d'un véhicule, selon la revendication 1, le système de lubrification comprenant :
- un réservoir apte à contenir un lubrifiant ; et
- au moins une pompe configurée pour pomper le lubrifiant du réservoir à ladite composante via un conduit.

Le système de lubrification comprend un contrôleur comportant un moyen d'évaluation de la consommation du lubrifiant pompée par la pompe pendant un cycle opérationnel, le contrôleur étant configuré pour estimer la quantité du lubrifiant restant dans le réservoir au moins en fonction d'une information de consommation du lubrifiant générée par le moyen d'évaluation.

Suivant d'autres aspects avantageux de l'invention, le véhicule comprend une ou plusieurs des caractéristiques suivantes, prise(s) isolément ou suivant toutes les combinaisons correspondant aux revendications dépendantes :
- le système comprend en outre un capteur configuré pour détecter le lubrifiant à un niveau prédéterminé dans le réservoir et pour fournir un signal de niveau correspondant au contrôleur ;
- le capteur est un pressostat configuré pour détecter un niveau haut ou un niveau bas du lubrifiant en fonction de la pression dans le réservoir, ou un capteur capacitif comprenant deux électrodes, le capteur capacitif étant configuré pour détecter un niveau haut ou un niveau bas du lubrifiant en fonction d'une mesure de capacité entre les deux électrodes ;
- le capteur est configuré pour générer le signal de niveau lorsqu'il détecte un niveau bas du lubrifiant dans le réservoir, le contrôleur étant configuré pour déclencher une alarme lorsqu'il reçoit le signal de niveau ;
- le capteur est configuré pour générer le signal de niveau lorsqu'il détecte un niveau haut du lubrifiant dans le réservoir, le contrôleur étant configuré pour réinitialiser le moyen d'évaluation lorsqu'il reçoit le signal de niveau pour définir un nouveau cycle opérationnel ;
- le système de lubrification comprend en outre un deuxième capteur configuré pour générer un deuxième signal de niveau lorsqu'il détecte un niveau bas du lubrifiant dans le réservoir, et pour transmettre le deuxième signal de niveau au contrôleur. ;
- le contrôleur est configuré pour détecter une fuite du système de lubrification ou une surconsommation du lubrifiant lorsque le contrôleur reçoit le deuxième signal et lorsque l'information de consommation indique une quantité de lubrifiant pompée par la pompe pendant le cycle opérationnel inférieure à un seuil prédéterminé ;
- le contrôleur est configuré pour détecter un engorgement du conduit lorsque l'information de consommation indique une quantité de lubrifiant pompée par la pompe pendant le cycle opérationnel supérieure à un seuil prédéterminé, en l'absence d'une réception par le contrôleur du deuxième signal de niveau ; et
- le moyen d'évaluation est configuré pour détecter un nombre d'activations de la pompe et/ou une durée de fonctionnement de la pompe pendant le cycle opérationnel, et pour fournir l'information de consommation à partir du nombre d'activations de la pompe et/ou de la durée de fonctionnement de la pompe.

Selon un autre aspect, l'invention concerne un véhicule comprenant un système de lubrification tel que décrit ci-dessus, la composante étant par exemple un boudin de roue du véhicule.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'une partie d'un véhicule comprenant un système de lubrification ayant un réservoir contenant un lubrifiant à un niveau haut ; et
- [Fig 2] la figure 2 est une vue schématique d'une partie du véhicule de la figure 1 comprenant un système de lubrification ayant un réservoir contenant un lubrifiant à un niveau bas.

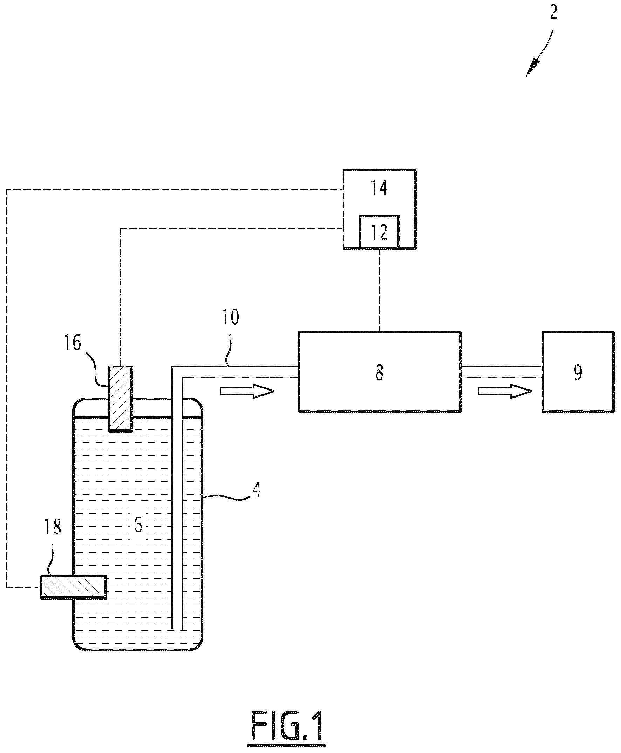

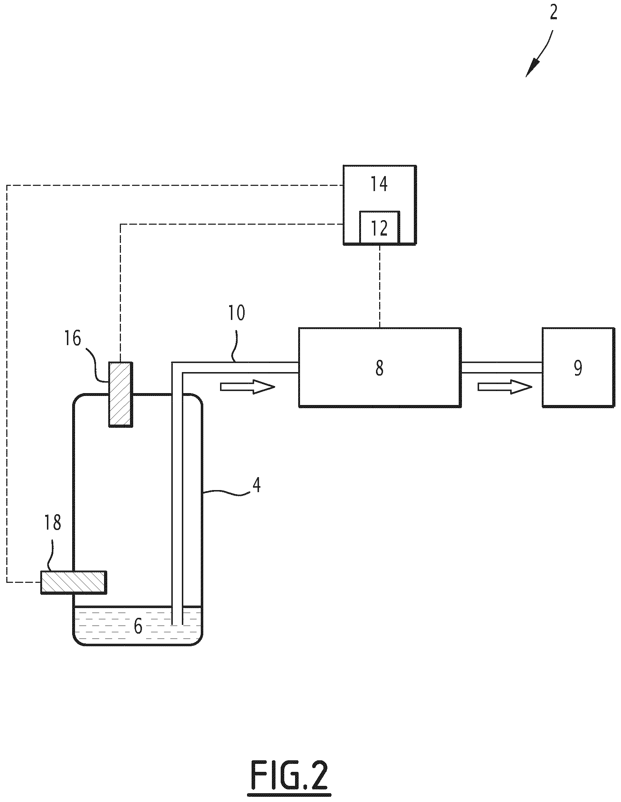

Sur les figures 1 et 2, un véhicule comprend un système de lubrification 2 comprenant un réservoir 4 apte à contenir un lubrifiant 6 et une pompe 8 configurée pour pomper le lubrifiant 6 du réservoir 4 à une composante 9 du véhicule via un conduit 10.

Le véhicule est par exemple un véhicule ferroviaire.

Le lubrifiant 6 est par exemple un liquide comprenant notamment de l'huile.

La composante 9 est par exemple un boudin de roue.

Le système de lubrification 2 comprend un contrôleur 14 comprenant un moyen d'évaluation 12 de la consommation du lubrifiant 6 pompée par la pompe 8 pendant un cycle opérationnel.

Par « cycle opérationnel », il est entendu la durée entre deux réinitialisations consécutives du moyen d'évaluation 12.

Le moyen d'évaluation 12 est par exemple configuré pour détecter un nombre d'activations de la pompe 8 et/ou une durée de fonctionnement de la pompe 8 pendant le cycle opérationnel. En particulier, le moyen d'évaluation est configuré pour générer une information de consommation, notamment à partir du nombre d'activations de la pompe 8 et/ou une durée de fonctionnement de la pompe 8. L'information de consommation est par exemple le volume du lubrifiant 6 ou sa masse, évalué par le moyen d'évaluation 12.

Le moyen d'évaluation 12 comprend par exemple un compteur associé à une électrovanne, et est configuré pour compter le nombre d'activations de l'électrovanne lors d'un cycle opérationnel.

La pompe 8 est par exemple une pompe volumétrique. Par « pompe volumétrique », il est entendu une pompe configurée pour pomper un volume prédéfini par cycle de fonctionnement de la pompe.

Le contrôleur 14 est en outre configuré pour estimer la quantité du lubrifiant 6 restant dans le réservoir 4 au moins en fonction de l'information de consommation du lubrifiant 6 générée par le moyen d'évaluation 12.

Par exemple, le contrôleur 14 est configuré pour comparer l'information de consommation avec un volume du réservoir 4, et pour estimer ainsi la quantité du lubrifiant 6 restant dans le réservoir 4.

Par exemple, le moyen d'évaluation12 est configuré pour être réinitialisé par réception d'un signal correspondant du contrôleur 14 lors d'un nouveau cycle opérationnel. En variante, le moyen d'évaluation 12 est par exemple configuré pour être réinitialisé manuellement par un opérateur lors d'un nouveau cycle opérationnel.

Par exemple, le système de lubrification 2 comprend en outre un premier capteur 16 configuré pour détecter le lubrifiant 6 à un niveau prédéterminé dans le réservoir 4 et pour fournir un signal de niveau correspondant au contrôleur 14.

Par exemple, le signal de niveau est un signal booléen. Par exemple, lorsque le premier capteur 16 détecte le lubrifiant 6, le premier capteur 16 envoie le signal de détection, le signal de détection étant ainsi égal à 1. Dans cet exemple, lorsque le premier capteur 16 ne détecte pas le lubrifiant, le premier capteur 16 n'envoie pas de signal de détection, le signal de détection étant ainsi égal à 0.

En variante, le signal de détection est égal à 1 lorsque le premier capteur 16 ne détecte pas le lubrifiant 6 et égal à 0 lorsqu'il le détecte.

Dans l'exemple des figures 1 et 2, le premier capteur 16 est configuré pour détecter le lubrifiant 6 lorsqu'il est à un niveau haut dans le réservoir 4, comme visible en particulier sur la figure 1. Lors du niveau haut, le réservoir 4 est quasi-plein en lubrifiant 6, par exemple plein à 90% d'une capacité du réservoir 4.

Par exemple, le premier capteur 16 est configuré pour générer le signal de niveau lorsqu'il détecte le niveau haut du lubrifiant 6 dans le réservoir 4. Dans ce cas, le contrôleur 14 est par exemple configuré pour réinitialiser le moyen d'évaluation 12 lorsqu'il reçoit le signal de niveau pour définir un nouveau cycle opérationnel.

En variante non représentée, le premier capteur 16 est configuré pour détecter que le lubrifiant 6 est à un niveau bas dans le réservoir 4. Le niveau bas est en particulier visible sur la figure 2. Lors du niveau bas, le réservoir 4 est quasi-vide, par exemple comprend une quantité de lubrifiant représentant moins de 10% de la capacité du réservoir 4.

Selon cette variante, le premier capteur 16 est ainsi par exemple configuré pour générer le signal de niveau lorsqu'il détecte le niveau bas du lubrifiant 6 dans le réservoir 4. Dans ce cas, le contrôleur 14 est configuré pour déclencher une alarme lorsqu'il reçoit le signal de niveau.

Le premier capteur 16 est par exemple un pressostat configuré pour détecter un niveau haut ou un niveau bas du lubrifiant 6 en fonction de la pression dans le réservoir 4.

Selon un autre exemple, le premier capteur 16 est un capteur capacitif comprenant deux électrodes, configuré pour détecter un niveau haut ou un niveau bas du lubrifiant 6 en fonction d'une mesure de capacité entre les deux électrodes. Un changement de la capacité correspond ainsi à la présence ou non du lubrifiant 6.

Selon un autre exemple, le premier capteur 16 est un radar configuré pour détecter le niveau de lubrifiant 6 dans le réservoir 4 par émission et réception de signaux électromagnétiques.

Comme visible par exemple sur les figures 1 et 2, le système de lubrification 2 comprend en outre un deuxième capteur 18 configuré pour générer un deuxième signal de niveau lorsqu'il détecte un niveau bas du lubrifiant 6 dans le réservoir 4, et pour transmettre le deuxième signal de niveau au contrôleur 14. Par exemple, le contrôleur 14 est configuré pour déclencher l'alarme lorsqu'il reçoit ce signal de niveau.

Le deuxième capteur 18 est par exemple du même type que le premier capteur 16.

Par exemple, le contrôleur 14 est configuré pour détecter une fuite du système de lubrification 2 ou une surconsommation du lubrifiant 6 lorsque le contrôleur 14 reçoit le deuxième signal et lorsque l'information de consommation indique une quantité de lubrifiant 6 pompée par la pompe 8 pendant le cycle opérationnel inférieure à un seuil prédéterminé.

Par exemple, lorsque le contrôleur 14 estime, basé sur l'information de consommation du moyen d'évaluation 12, que le réservoir 4 est à moitié plein, mais qu'il reçoit le deuxième signal, le contrôleur est ainsi apte à détecter une perte du lubrifiant 6. Cela correspond par exemple à une fuite ou à une surconsommation.

Par « surconsommation », il est entendu que la pompe 8 pompe une quantité de lubrifiant 6 par unité de temps supérieure à une quantité prédéterminée pompée par l'unité de temps.

Le contrôleur 14 est par exemple en outre configuré pour détecter un engorgement du conduit 10 lorsque l'information de consommation indique une quantité de lubrifiant 6 pompée par la pompe 8 pendant le cycle opérationnel supérieure à un seuil prédéterminé, en l'absence d'une réception par le contrôleur 14 du deuxième signal de niveau.

Par exemple, lorsque le conduit 10 est bouché, le moyen d'évaluation12 détermine une quantité augmentant au fur et à mesure de lubrifiant 6 pompé lors du fonctionnement de la pompe 8. Du fait de l'engorgement, le niveau du lubrifiant 6 dans le réservoir 4 ne descend pas en réalité, ce qui est ainsi détecté par le contrôleur 14.

Selon un premier mode de réalisation, le système de lubrification 2 comprend le premier capteur 16 et est dépourvu du deuxième capteur 18.

Selon un deuxième mode de réalisation, le système de lubrification 2 comprend le deuxième capteur 18 et est dépourvu du premier capteur 16.

Selon un troisième mode de réalisation, le système de lubrification 2 comprend le premier capteur 16 et le deuxième capteur 18.

Un exemple de fonctionnement du véhicule ferroviaire comprenant le système de lubrification 2 est décrit dans ce qui suit.

Lors d'un remplissage du réservoir 4, le premier capteur 16 détecte le lubrifiant 6 au niveau haut dans le réservoir 4. Par exemple, le premier capteur 16 génère le signal de niveau et l'envoie au contrôleur 14. Le contrôleur 14 réinitialise le moyen d'évaluation 12 lorsqu'il reçoit le signal de niveau pour définir un nouveau cycle opérationnel.

Lors de l'opération du véhicule ferroviaire pendant le cycle opérationnel, le moyen d'évaluation12 génère l'information de consommation du lubrifiant 6 pompée par la pompe 8 pendant ce cycle opérationnel.

Le contrôleur 14 estime la quantité du lubrifiant 6 restant dans le réservoir 4 au moins en fonction de l'information de consommation. Par exemple, lorsque le contrôleur 14 estime un niveau inférieur à un seuil prédéterminé, il déclenche une alarme.

En variante ou en complément, le deuxième capteur 18 génère le deuxième signal de niveau lorsqu'il détecte un niveau bas du lubrifiant 6 dans le réservoir 4. Le contrôleur 14 déclenche ainsi l'alarme lorsqu'il reçoit ce signal de niveau.

Cela permet par exemple de confirmer l'estimation du contrôleur 14.

Par exemple un opérateur remplit ou non le réservoir 4 lors d'une maintenance en fonction de l'estimation du contrôleur 14 ou lorsque le contrôleur 14 a déclenché l'alarme.

Selon un exemple, lors du remplissage du réservoir 4, le premier capteur 16 génère le signal de niveau puisqu'il détecte le niveau haut du lubrifiant 6 dans le réservoir 4. Le contrôleur 14 réinitialise le moyen d'évaluation 12 lors de la réception du signal de niveau, et définit ainsi un nouveau cycle opérationnel.

Cela permet notamment une surveillance automatique du niveau du lubrifiant dans le réservoir 4, sans réinitialisation manuelle du moyen d'évaluation 12 lors d'un remplissage du réservoir 4.

On conçoit que le véhicule ferroviaire comprenant le système de lubrification 2 présente un certain nombre d'avantages.

En effet, le niveau du lubrifiant 6 contenu dans le réservoir 4 est connu par l'estimation du contrôleur 14.

Cela permet par exemple de remplir le réservoir 4 uniquement si le niveau estimé est inférieur à un niveau prédéterminé. En outre, grâce à cette estimation, un opérateur peut s'assurer que le réservoir 4 du système de lubrification 2 contient suffisamment de lubrifiant 6 pour le cycle opérationnel.

Ainsi, le véhicule ferroviaire présente un besoin de maintenance réduit, tout en garantissant une lubrification de la ou les composantes 9 du véhicule ferroviaire.

## Revendications

1. Système de lubrification (2) d'au moins une composante (9) d'un véhicule, le système de lubrification (2) comprenant :
- un réservoir (4) apte à contenir un lubrifiant (6) ;
- au moins une pompe (8) configurée pour pomper le lubrifiant (6) du réservoir (4) à ladite composante (9) via un conduit (10) ;
- un contrôleur (14) comportant un moyen d'évaluation (12) de la consommation du lubrifiant (6) pompée par la pompe (8) pendant un cycle opérationnel, le contrôleur (14) étant configuré pour estimer la quantité du lubrifiant (6) restant dans le réservoir (4) au moins en fonction d'une information de consommation du lubrifiant (6) générée par le moyen d'évaluation (12) ;
- un capteur (16, 18) configuré pour détecter le lubrifiant (6) à un niveau prédéterminé dans le réservoir (4) et pour fournir un signal de niveau correspondant au contrôleur (14), le capteur (16) étant configuré pour générer le signal de niveau lorsqu'il détecte un niveau haut du lubrifiant (6) dans le réservoir (4) ; et
- un deuxième capteur (18) configuré pour générer un deuxième signal de niveau lorsqu'il détecte un niveau bas du lubrifiant (6) dans le réservoir (4), et pour transmettre le deuxième signal de niveau au contrôleur (14),
le contrôleur (14) étant configuré pour détecter une fuite du système de lubrification (2) ou une surconsommation du lubrifiant (6) lorsque le contrôleur (14) reçoit le deuxième signal et lorsque l'information de consommation indique une quantité de lubrifiant (6) pompée par la pompe (8) pendant le cycle opérationnel inférieure à un seuil prédéterminé.

2. Système de lubrification (2) selon la revendication 1, dans lequel le capteur (16, 18) est un pressostat configuré pour détecter un niveau haut ou un niveau bas du lubrifiant (6) en fonction de la pression dans le réservoir (4), ou un capteur capacitif comprenant deux électrodes, le capteur capacitif étant configuré pour détecter un niveau haut ou un niveau bas du lubrifiant (6) en fonction d'une mesure de capacité entre les deux électrodes.

3. Système de lubrification (2) selon la revendication 1 ou 2, dans lequel le contrôleur (14) est configuré pour déclencher une alarme lorsqu'il reçoit le deuxième signal de niveau.

4. Système de lubrification (2) selon la revendication 1 ou 2, dans lequel le contrôleur (14) est configuré pour réinitialiser le moyen d'évaluation (12) lorsqu'il reçoit le signal de niveau pour définir un nouveau cycle opérationnel.

5. Système de lubrification (2) selon l'une des revendications 1 à 4, dans lequel le contrôleur (14) est configuré pour détecter un engorgement du conduit (10) lorsque l'information de consommation indique une quantité de lubrifiant (6) pompée par la pompe (8) pendant le cycle opérationnel supérieure à un seuil prédéterminé, en l'absence d'une réception par le contrôleur (14) du deuxième signal de niveau.

6. Système de lubrification (2) selon l'une quelconques des revendications 1 à 5, dans lequel le moyen d'évaluation (12) est configuré pour détecter un nombre d'activations de la pompe (8) et/ou une durée de fonctionnement de la pompe (8) pendant le cycle opérationnel, et pour fournir l'information de consommation à partir du nombre d'activations de la pompe (8) et/ou de la durée de fonctionnement de la pompe (8).

7. Véhicule comprenant un système de lubrification selon l'une quelconque des revendications 1 à 6, la composante (9) étant par exemple un boudin de roue du véhicule.

## Patentansprüche

1. Schmiersystem (2) mindestens einer Komponente (9) eines Fahrzeugs, wobei das Schmiersystem (2) umfasst:
- einen Behälter (4), welcher geeignet ist, ein Schmiermittel (6) zu fassen;
- mindestens eine Pumpe (8), welche dazu konfiguriert ist, das Schmiermittel (6) von dem Behälter (4) zu der Komponente (9) über eine Leitung (10) zu pumpen;
- eine Steuereinheit (14), welche ein Mittel zur Evaluierung (12) des Verbrauchs des Schmiermittels (6) umfasst, welches durch die Pumpe (8) während eines Betriebszyklus gepumpt wird, wobei die Steuereinheit (14) dazu konfiguriert ist, die Menge des Schmiermittels (6), welche in dem Behälter (4) verbleibt, mindestens in Abhängigkeit von einer Verbrauchsinformation des Schmiermittels (6), welche von dem Mittel zur Evaluierung (12) erzeugt wird, abzuschätzen;
- einen Sensor (16, 18), welcher dazu konfiguriert ist, das Schmiermittel (6) auf einem vorbestimmten Niveau in dem Behälter (4) zu detektieren und ein entsprechendes Pegelsignal an die Steuereinheit (14) zu liefern, wobei der Sensor (16) dazu konfiguriert ist, das Pegelsignal zu erzeugen, wenn er einen hohen Pegel des Schmiermittels (6) in dem Behälter (4) erfasst; und
- einen zweiten Sensor (18), welcher dazu konfiguriert ist, ein zweites Pegelsignal zu erzeugen, wenn er einen niedrigen Pegel des Schmiermittels (6) in dem Behälter (4) detektiert, und das zweite Pegelsignal an die Steuereinheit (14) zu übermitteln,
wobei die Steuereinheit (14) dazu konfiguriert ist, eine Leckage des Schmiersystems (2) oder einen Überverbrauch des Schmiermittels (6) zu detektieren, wenn die Steuereinheit (14) das zweite Signal empfängt und wenn die Verbrauchsinformation eine Menge des Schmiermittels (6), welche von der Pumpe (8) während des Betriebszyklus gepumpt wird, anzeigt, welche niedriger als ein vorbestimmter Schwellenwert ist.

2. Schmiersystem (2) nach Anspruch 1, wobei der Sensor (16, 18) ein Druckschalter, welcher dazu konfiguriert ist, einen hohen Pegel oder einen niedrigen Pegel des Schmiermittels (6) in Abhängigkeit von dem Druck in dem Behälter (4) zu detektieren, oder ein kapazitiver Sensor ist, welcher zwei Elektroden umfasst, wobei der kapazitive Sensor dazu konfiguriert ist, einen hohen Pegel oder einen niedrigen Pegel des Schmiermittels (6) in Abhängigkeit von einer Kapazitätsmessung zwischen den zwei Elektroden zu detektieren.

3. Schmiersystem (2) nach Anspruch 1 oder 2, wobei die Steuereinheit (14) dazu konfiguriert ist, einen Alarm auszulösen, wenn sie das zweite Pegelsignal empfängt.

4. Schmiersystem (2) nach Anspruch 1 oder 2, wobei die Steuereinheit (14) dazu konfiguriert ist, das Mittel zur Evaluierung (12) zurückzusetzen, wenn sie das Pegelsignal empfängt, um einen neuen Betriebszyklus zu definieren.

5. Schmiersystem (2) nach einem der Ansprüche 1 bis 4, wobei die Steuereinheit (14) dazu konfiguriert ist, eine Verstopfung der Leitung (10) zu detektieren, wenn die Verbrauchsinformation eine Menge des Schmiermittels (6), welche von der Pumpe (8) während des Betriebszyklus gepumpt wird, anzeigt, welche höher als ein vorbestimmter Schwellenwert ist, in der Abwesenheit eines Empfangens des zweiten Pegelsignals durch die Steuereinheit (14).

6. Schmiersystem (2) nach einem der Ansprüche 1 bis 5, wobei das Mittel zur Evaluierung (12) dazu konfiguriert ist, eine Anzahl von Aktivierungen der Pumpe (8) und/oder eine Betriebsdauer der Pumpe (8) während des Betriebszyklus zu detektieren und die Verbrauchsinformation aus der Anzahl von Aktivierungen der Pumpe (8) und/oder der Betriebsdauer der Pumpe (8) zu liefern.

7. Fahrzeug, umfassend ein Schmiersystem nach einem der Ansprüche 1 bis 6, wobei die Komponente (9) beispielsweise ein Spurkranz einer Radscheibe des Fahrzeugs ist.

## Claims

1. Lubrication system (2) for at least one component (9) of a vehicle, the lubrication system (2) comprising:
- a reservoir (4) capable of holding a lubricant (6);
- at least one pump (8) configured to pump the lubricant (6) from the reservoir (4) to said component (9) via a duct (10);
- a controller (14) comprising means (12) for evaluating the consumption of the lubricant (6) pumped by the pump (8) during an operating cycle, the controller (14) being configured to estimate the amount of lubricant (6) remaining in the reservoir (4) at least according to information regarding the consumption of the lubricant (6) generated by the evaluation means (12);
- a sensor (16, 18) configured to detect the lubricant (6) at a predetermined level in the reservoir (4) and to provide a corresponding level signal to the controller (14), the sensor (16) being configured to generate the level signal when it detects a high level of the lubricant (6) in the reservoir (4); and
- a second sensor (18) configured to generate a second level signal when it detects a low level of lubricant (6) in the reservoir (4), and to transmit the second level signal to the controller (14),
the controller (14) being configured to detect a leak in the lubrication system (2) or an excessive consumption of lubricant (6) when the controller (14) receives the second signal and when the consumption information indicates that an amount of lubricant (6) pumped by the pump (8) during the operating cycle is below a predetermined threshold.

2. Lubrication system (2) according to claim 1, wherein the sensor (16, 18) is a pressure switch configured to detect a high or low level of the lubricant (6) based on the pressure in the reservoir (4), or a capacitive sensor comprising two electrodes, the capacitive sensor being configured to detect a high or low level of the lubricant (6) based on a capacitance measurement between the two electrodes.

3. Lubrication system (2) according to claim 1 or 2, wherein the controller (14) is configured to trigger an alarm when it receives the second level signal.

4. Lubrication system (2) according to claim 1 or 2, wherein the controller (14) is configured to reset the evaluation means (12) when it receives the level signal to define a new operating cycle.

5. Lubrication system (2) according to one of claims 1 to 4, wherein the controller (14) is configured to detect a blockage in the duct (10) when the consumption information indicates that an amount of lubricant (6) pumped by the pump (8) during the operating cycle is greater than a predetermined threshold, in the absence of the controller (14) receiving the second level signal.

6. Lubrication system (2) according to any one of claims 1 to 5, wherein the evaluation means (12) is configured to detect a number of activations of the pump (8) and/or a duration of operation of the pump (8) during the operating cycle, and to provide consumption information based on the number of activations of the pump (8) and/or the duration of operation of the pump (8).

7. Vehicle comprising a lubrication system according to any one of claims 1 to 6, the component (9) being for example a wheel flange of the vehicle.
